Europäisches Patentamt

European Patent Office

Office européen des brevets

Publication number: **0 292 209**
**A1**

# EUROPEAN PATENT APPLICATION

Application number: 88304345.7

Date of filing: 13.05.88

Int. Cl.⁴: **G03H 1/32 , G03H 1/26 , G02B 5/32**

Priority: 20.05.87 GB 8711883

Date of publication of application:
23.11.88 Bulletin 88/47

Designated Contracting States:
CH DE ES FR GB IT LI NL SE

Applicant: **HOLTRONIC TECHNOLOGIES
LIMITED**
**Rolls House 7 Rolls Buildings Fetter Lane
London EC4A 1NH(GB)**

Inventor: **Tomkins, Donald William
83 Beacon Road
Loughborough Leicestershire LE11 2BG(GB)**
Inventor: **Holden, Laurence
21 Otterfield Road
Yiewsley Middlesex(GB)**

Representative: **Ellis, Edward Lovell et al
MEWBURN ELLIS & CO. 2/3 Cursitor Street
London EC4A 1BQ(GB)**

**A method of speckle reduction in laser replayed holographic images.**

The reduction of speckle in coherent radiation replayed holographic images in achieved by the preparation of a holographic optical element (10) having a plurality of separate sectors (21-24) which constitute efficient transmission elements. A composition hologram of an object (14) made on the recording medium of a plate (13) by making a plurality of successive exposures of the separate sectors in turn using a rotating disc (12) having an aperture (17) therein. The composite hologram is then processed to form a high definition virtual image of the object. Finally the hologram is replayed with each of the separate sectors formed on the holographic optical element in sequence at high speed. The speckle field of the object can be altered by rotating a diffuser (11) in the path of the coherent radiation.

FIG 4a

## "A METHOD OF SPECKLE REDUCTION IN LASER REPLAYED HOLOGRAPHIC IMAGES".

The present invention relates to a method of speckle reduction in laser replayed holographic images.

Speckle is a type of noise observed in a laser illuminated scene or holographic image. Speckle occurs in the hologram because the holographic imaging method creates such a precise duplicate of the wavefront coming from the imaged object. Since the holographic images of diffuse objects are so faithful, they suffer from the same defect as any image of a diffuse object formed with coherent light, namely, that the observer sees a scintillating, salt-and-pepper appearance. This problem is known as laser speckle.

The size of the speckles depends on the resolving power of the imaging system in the case where the diffuse surface is being imaged (by a microscope for example), and on the size of the illuminated spot and the distance to the viewing plane in the case where no imaging system is involved. When an imaging system is involved, the size of the speckle is equal to the least resolved spot on the diffuse surface. Hence, as the aperture of the imaging system is stopped down more and more, the resolution becomes less and less and the speckle size becomes greater.

Speckle actually arises because of the scattering of coherent light from a diffuse surface. Each scattering centre of the diffuse surface acts like a point source of monochromatic light that is mutually coherent with all of the other point sources on the diffuse surface. Each, however, differs in phase from all of the others in a random fashion. The light from all these points within one barely resolvable spot of the diffuse surface is brought to a focus within an area the size of the spread function of the imaging system. Depending on how the phases add up within one of these elementary areas, it can range from completely dark to a bright spot.

In the case where no imaging system is involved, speckle is still formed by the same process, except that in this case the aperture is simply the area of the diffuse surface that is illuminated. The size of the speckle depends on the ratio of the diameter of this area to the distance to the plane on which the speckles are observed.

It can be shown that the RMS fluctuations of irradiance in a speckle pattern are comparable with the average irradiance itself. Hence the problems of laser speckle can be serious especially when trying to store images on small holograms or in doing holographic microscopy.

The most straightforward way of eliminating speckle is to eliminate the diffuse nature of the object and use one that is specular, however this is obviously not a solution that can be applied to all situations. Another way of reducing speckle is simply to increase the size of the hologram so that its f-number is very low. The resolution in the image formed is then high so that the size of the just resolvable spot is small. This means that the speckle size can be too small to be seen; however, this method is not applicable to holographic microscopy.

A number of solutions have been proposed for reducing speckle, and a few examples are now given.

A method of speckle reduction by simulation of partially coherent object illumination in holography as applied to specular transmissive objects is disclosed in Applied Optics, Vol. 12 No. 2, February 1973 by R.F. van Ligten. This method based on a simulation of extended source illumination of the object, consists of two steps. The first is to illuminate the object with a plurality of point sources each of which is mutually coherent with the reference source. The second step takes place after the hologram has been made. During the reconstruction, a mask is placed in the plane, conjugate to the plane containing the plurality of object illuminating sources. An aperture in this mask is then moved to take positions to transmit only the light from one of the plurality of points at a time and to block the light from all the other points. The images thus detected are additive in intensity, simulating the plurality of the illuminating point sources to be mutually incoherent.

An improvement of the holographic imaging quality by the method of non-coherent superposition of images is disclosed in Optica Applicata, Vol. 10, No. 3, 1980, by E. Mroz and R. Pawluczyk. The method which is applicable to transmissive objects only, consists in the non-coherent superposition of images. Several holograms corresponding to several spatially separated reference beams have been recorded at the same place of the holographic plate, the phase distribution in the object beam being changed before each exposure. In the reconstruction, the images reconstructed from the subsequent holograms by means of the respective reference beams, are recorded at the same place in the recording material which enables non-coherent superposition of the images to be obtained. In practice this method does not appear to work unless each reference beam is not coherent with the other.

The above referred to proposals are specifically confined to transmissive objects and as such are not a general solution to the problem of speckle reduction.

It is an object of the present invention to overcome the above disadvantage, such that the method is more generally applicable to diffusly illuminated solid objects.

According to the present invention there is provided a method of speckle reduction in coherent radiation replayed holographic images, said method including the steps of:-

(a) preparing a holographic optical element having a plurality of separate sectors constituting efficient transmission elements;

(b) preparing a composition hologram of an object by making a plurality of successive exposures using each of the plurality of separate sectors in turn;

(c) processing the composite hologram to form a high definition virtual image of the object; and

(d) replaying the hologram with each of the plurality of separate sectors formed on the holographic optical element in sequence at high speed.

Preferably in the step of making the plurality of separate sectors, each sector is made in turn by exposure to a collimated beam of coherent radiation and an expanding beam obtained from the same source of coherent radiation in the form of a distinct point source, the position of each point source being different for each exposure.

It will be appreciated that the position for each source point must be chosen so that each source only replays that sector associated with it and not any of the other sectors recorded in the holographic optical element.

In the same step of making the plurality of separate sectors, between each exposure, the speckle field of the object may be altered by rotating a diffuser in the path of the collimated beam of coherent radiation.

The present invention will now be described in greater detail by way of example with reference to the accompanying drawings, wherein:-

Figure 1a is a diagrammatic view illustrating the principle of apparatus for viewing a composite hologram;

Figure 1b is a diagram illustrating how the composite holographic image is formed with the apparatus shown in Figure 1a;

Figure 2 is a diagram showing the holographic optical element shown in Figure 1a;

Figure 3 is a diagram showing the rotating apertured disc shown in Figure 1a;

Figure 4a is a diagramatic view of the preferred form of apparatus for making a composite hologram;

Figure 4b is a diagram illustrating how the composite hologram is formed with the apparatus shown in Figure 4a;

Figure 5 is a diagram which illustrates what happens on replay; and

Figure 6 is a diagrammatic apparatus illustrating a method of producing the sectored holographic optical element.

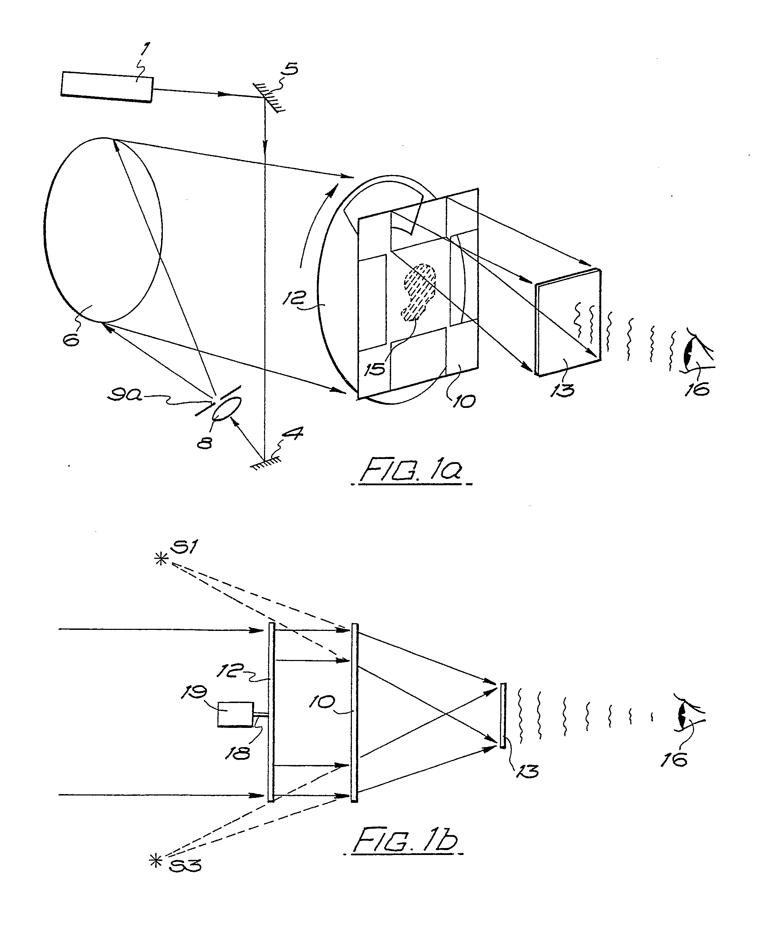

First, the apparatus for viewing a composite holographic image will be described with reference to Figures 1a and 1b. The apparatus includes a laser 1, mirrors 4 and 5, a collimating mirror 6, a lens 8; associated spatial filter 9a, a holographic optical element 10, a rotating apertured disk 12, and a plate 13 on which the composite holographic image has been recorded.

A beam of coherent radiation from the laser 1 is reflected by the mirrors 5 and 4 onto the lens 8. This beam of coherent radiation after passing through the spatial filter 9a associated with the lens 8, diverges in the form of a cone to cover the whole surface of the collimating mirror 6. The collimating mirror 6 projects a cylindrical beam of the coherent radiation towards the apertured disk 12.

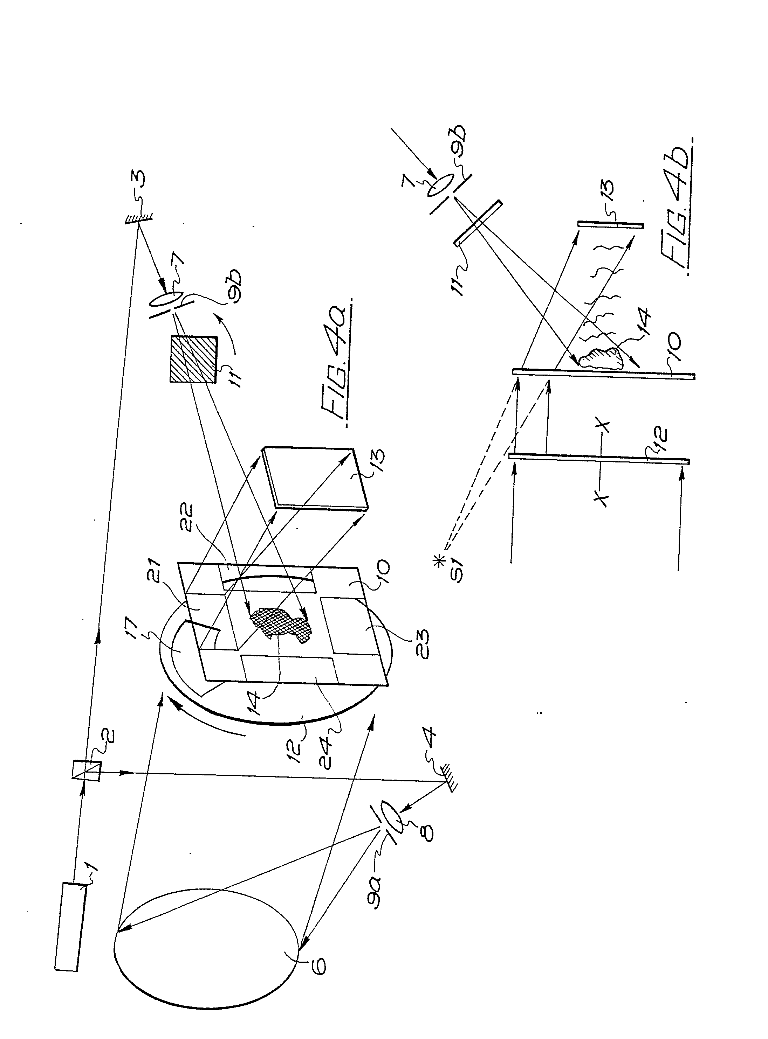

The apertured disk 12 is shown in geater detail in Figure 3. It contains an aperture 17 having a pair of radial edges 17a and a pair of arcuate edges 17b, the radial edges 17a extending at an angle of approximately 45° to the centre of the disk 12. A shaft 18 (see Figure 1b) passes through the centre of the disk 12 and is coupled to be driven by an electric motor 19 (see Figure 1b). The coupling may be either direct or through suitable gearing (not shown).

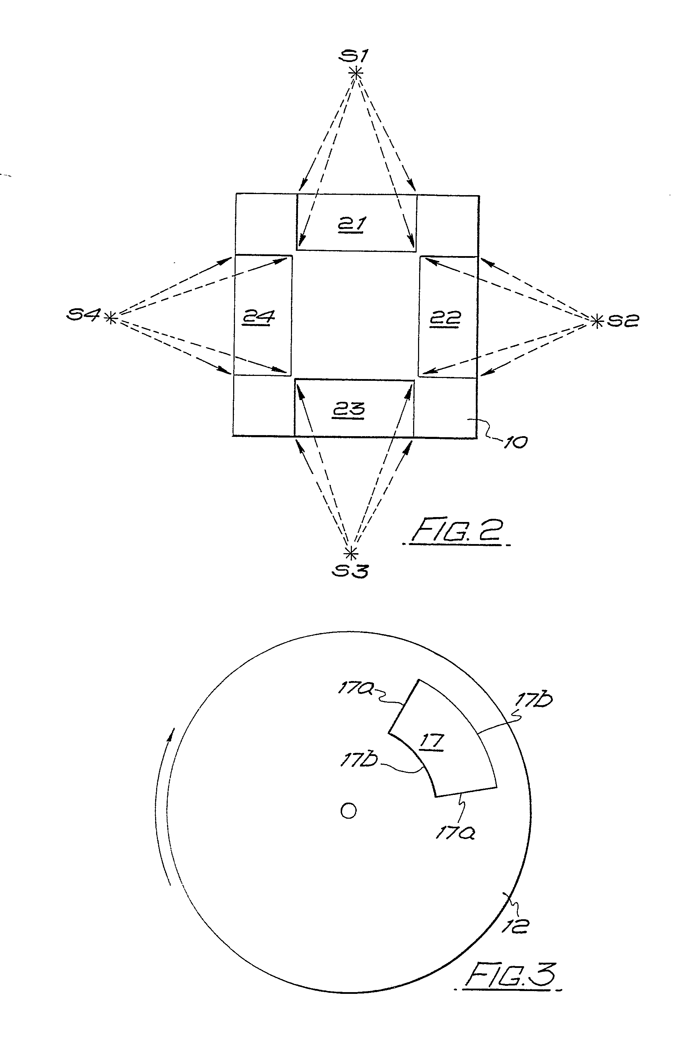

The holographic optical element 10 is shown in greater detail in Figure 2. It contains four diffractive rectangles 21 to 24 arranged at the respective four edges of the element 10. Each rectangular diffractive element 21 to 24 is prepared separately by exposing to a collimated beam of laser light and an expanding beam from the same laser from four points cources S1 to S4 respectively. These diffractive rectangles 21 to 24 when used in conjunction with the rotating apertured disk 12, will regenerate from the composite hologram sequentially four virtual images I1, I2, I3 and I4 respectively. Thus by sequential exposure with the aid of the rotating apertured disk 12, the coherent beam of radiation builds up a composite view of the holographic images at the viewing position 16, utilizing the four virtual sources S1 to S4 regenerated sequentially by the rotating disk 12 and holographic optical element 10 and the composite hologram 13.

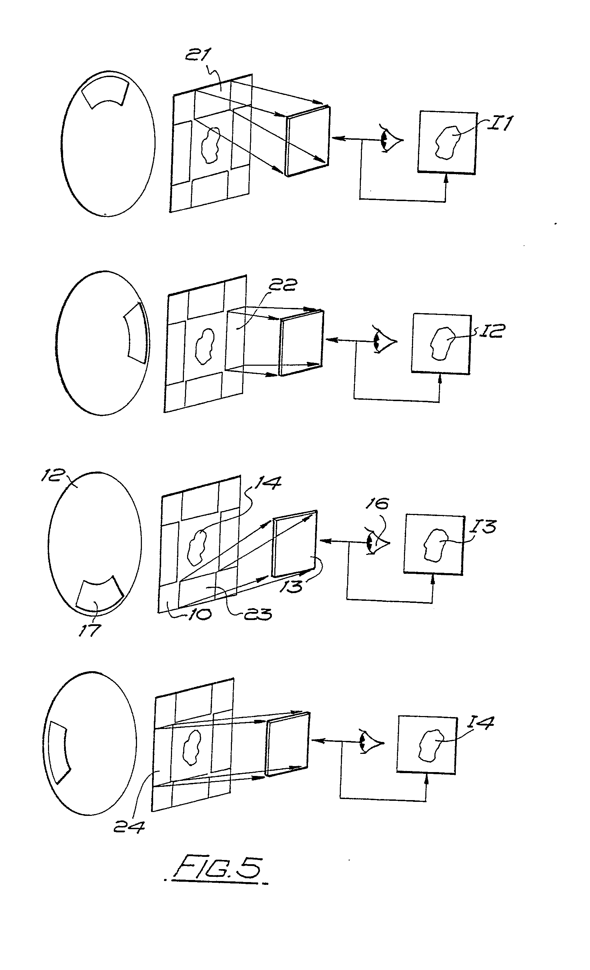

Referring now to Figures 4a and 4b, the complete apparatus to produce a composite hologram is shown. Instead of the mirror 5,a beam splitter 2 splits the beam of coherent radiation from the laser 1 into two paths. The first path is produced by internal reflection within the beam splitter 2 and is the same as that shown in Figure 1a. The second path which is transmitted through the beam splitter 2 is reflected by a mirror 3 to a second lens 7 and associated spatial filter 9b. The diverging beam after passing through a diffuser 11 is projected onto an object 14 located at the centre of the holographic optical element 10.

Four successive exposures of the composite hologram are made using the four different reference point sources S1 to S4. These were selected in turn by moving the aperture disk 12 in front of the holographic optical element 10, so that the other unwanted rectangles 21 to 24 are covered each time. Between each exposure, the speckle field of the object illumination was altered by rotating the diffuser 11 to a different position. After the fourth exposure had been completed, the hologram. recorded on the recording medium of the plate 13 was processed to form a high definition virtual image of the object 14.

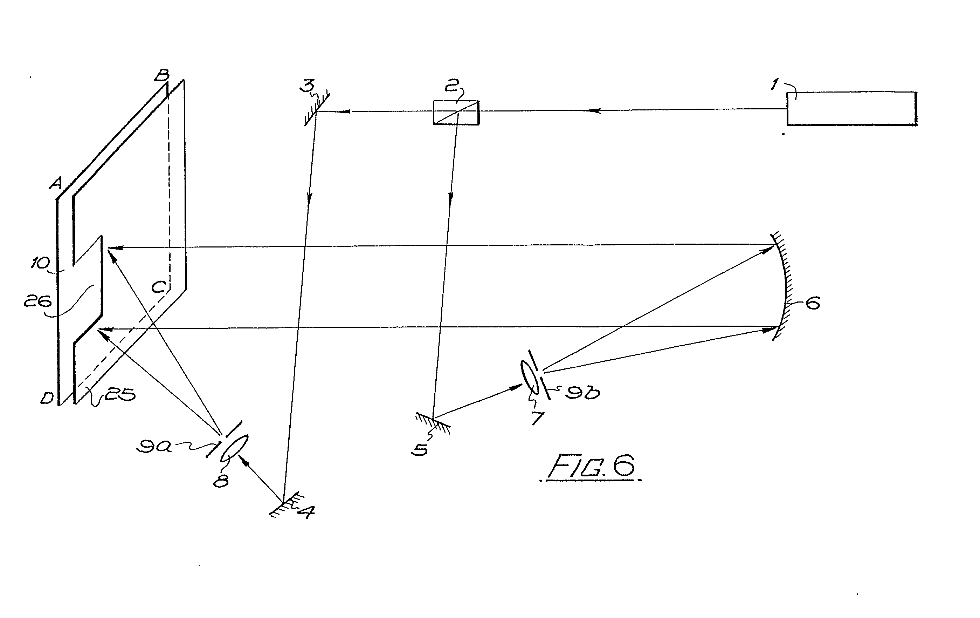

Figure 4b shows in greater detail the step of preparing the composite hologram of the object 14. It shows the case where the apertured disk 12 allows the collimated reference beam from the collimating mirror 6 to form the virtual source S1 after passing through the diffractive rectangle 21. This interferes with the coherent light from the laser 1 which passes through the lens 7 and associated spatial filter 9b, as well as the diffuser 11. The interference pattern thus formed is imaged on the recording medium of the holographic plate 13. The process is then repeated for the other diffractive rectangles 22 to 24, each time rotating the diffuser 11 clockwise or anti-clockwise by a given angle. This is illustrated in the four diagrams of Figure 5 where for the four virtual images I1 to I4 observed from the receiving position 16, the corresponding speckle fields F1 to F4 will all be different from one another, no two being equal or the same, whilst the corresponding virtual images I1 to I4 are all equal.

The holographic optical element 10 is produced by means of the apparatus shown in Figure 6. Like elements bear the same reference numerals as in the previous figures. The first sector is recorded by the interference of collimated light from the mirror 6 with mutually coherent expanding light from the lens 8, using a masking plate 25 having a rectangular cut-out section 26 which is the same size as each sector to be recorded. Subsequent sectors are produced by rotating the holographic recording plate constituted by the optical element 10 through 90° in the plane ABCD after each respective recording exposure. The plate is then chemically processed to produce a holographic optical element of high diffraction efficiency.

The replay of the composite hologram of the object 14 which is formed on the recording medium of the holographic plate 13 is achieved with the apparatus shown in Figures 1a and 1b. The apertured disk 12 is rotated at a constant high speed. This permits each of the four diffractive rectangles to pass coherent light in sequence onto the composite hologram formed on the plate 13, and thus produce a virtual image 15 of the object 14 at the centre of the holographic optical element 10. The virtual image when viewed with the naked eye or stero microscope positioned at 16, exhibits a significant reduction in speckle over the case when the disk 12 is stationary so that only one of the four images is displayed.

Incidentally, it should be noted that with the apertured disk 12 removed, i.e. with all the virtual images replayed simultaneously, no reduction in speckle will occur. Only when the four virtual images are played in sequence and at a speed high enough so that flicker is eliminated, does a significant reduction in speckle occur.

Thus it will be appreciated that the unique feature of the method described above is that each hologram, from the set of holograms, is replayed separately in turn and in a sequence with only fractions of a second between each hologram replay. This means that the various speckle fields are viewed sequentially and if the repeat time is small enough to eliminate flicker, a perfectly still image will be observed with speckle patterns "averaged" in space. The averaging effect will reduce the size and contrast of the speckle and hence allow higher resolutions to be achieved by the viewer, stereo microscope or camera.

## Claims

1. A method of speckle reduction in coherent radiation replayed holographic images, said method including the steps of:-

(a) preparing a holographic optical element (10) having a plurality of separate sectors (21,24) constituting efficient transmission element;

(b) preparing a composition hologram of an object (14) by making a plurality of successive exposures using each of the plurality of separate sectors in turn;

(c) processing the composite hologram (13) to form a high definition virtual image of the object; and

(d) replaying the hologram with each of the plurality of separate sectors formed on the holographic optical element in sequence at high speed.

2. The method according to claim 1, wherein in the step of making the plurality of separate sectors, each sector (21-24) is made in turn by exposure to a collimated beam of coherent radiation and a expanding beam obtained from the same source (1) of coherent radiation in the form of a distinct point source (51-54), the position of each point source being different for each exposure.

3. The method according to claim 1 or 2, wherein the plurality of successive exposures are made in sequence with aid of an apertured rotating disk (12) whereby a composite holographic image of the object is built up.

4. The method according to any one of the preceding claims, wherein in the step of making the plurality of separate sectors (51-54), the speckle field of the object is altered between each exposure by rotating a diffuser (11) in the path of the collimated beam of coherent radiation.

_FIG. 1a_

_FIG. 1b_

_FIG. 2_

_FIG.3_

FIG.4a.

FIG.4b.

_FIG.5_

FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | APPLIED OPTICS, vol. 12, no. 2, February 1973, pages 255-265; R.F. VAN LIGTEN: "Speckle reduction by simulation of partially coherent object illumination in holography" * Abstract * | 1,3 | G 03 H   1/32 G 03 H   1/26 G 02 B   5/32 |
| D,A | OPTICA APPLICATA, vol. X, no. 3, 1980, pages 205-210; E MROZ et al.: "An improvement of the holographic imaging quality bv the method of noncoherent superposition of images" * Page 206, lines 38-44; page 207, lines 15,16; figure 1 * | 1,4 | |
| A | APPLIED OPTICS, vol. 20, no. 10, May 1981, pages 1848-1853, Optical Society of America, New York, US; C.J. BUDHIRAJA et al.: "Improvement of image quality in holographic microscopy" * Page 1849, right-hand column, lines 9-26 * | 1,2 | |
| A | IBM TECHNICAL DISCLOSURE BULLETIN, vol. 12, no. 3, August 1969, page 367, New York, US; G.D. OGDEN et al.: "Multiplexing system for holographic projections" | 2,3 | TECHNICAL FIELDS SEARCHED (Int. Cl.4)  G 03 H   1/00 G 02 B   27/00 G 02 B   5/00 |
| A | US-A-3 640 599 (VAN LIGTEN) * Abstract; column 6, lines 44-65; column 7, lines 1-6 * | 1 | |
| A | APPLIED OPTICS, vol. 16, no. 5, May 1977, pages 1371-1375; A. TAI et al.: "Holographic speckle reduction by complementary spatial sampling" | | |

The present search report has been drawn up for all claims

| Place of search | Date of completion of the search | Examiner |
|---|---|---|
| THE HAGUE | 16-08-1988 | KLEIKAMP B.M.H.H. |

EPO FORM 1503 03.82 (P0401)